## Europäisches Patentamt
## European Patent Office
## Office européen des brevets

(19)

(11) Veröffentlichungsnummer : **0 030 934**
**B1**

(12) **EUROPÄISCHE PATENTSCHRIFT**

(45) Veröffentlichungstag der Patentschrift :
**11.05.83**

(21) Anmeldenummer : **80890147.4**

(22) Anmeldetag : **11.12.80**

(51) Int. Cl.³ : **B 23 K 11/32**, B 21 F 27/10

(54) **Nach der elektrischen Widerstandsmethode arbeitende Vielpunkt-Schweissmaschine zum Herstellen von Gittern aus Längs- und Querdrähten.**

(30) Priorität : **14.12.79 AT 7893/79**

(43) Veröffentlichungstag der Anmeldung :
**24.06.81 Patentblatt 81/25**

(45) Bekanntmachung des Hinweises auf die Patenterteilung : **11.05.83 Patentblatt 83/19**

(84) Benannte Vertragsstaaten :
**BE CH DE FR GB IT LI**

(56) Entgegenhaltungen :
**AT B 221 337**
**AT B 238 003**
**AT B 295 294**
**AT B 317 650**
**CH A 450 580**
**DE A 1 615 403**
**US A 2 481 844**

(73) Patentinhaber : **EVG Entwicklungs- u. Verwertungs-
Gesellschaft m.b.H.**
**Vinzenz-Muchitsch-Strasse 36**
**A-8011 Graz (AT)**

(72) Erfinder : **Gött, Hans, Dipl.-Ing.**
**Petersbergenstrasse 69** ·
**A-8042 Graz (AT)**
Erfinder : **Ritter, Josef, Dipl.-Ing. Dr.**
**Stenggstrasse 33**
**A-8043 Graz (AT)**
Erfinder : **Ritter, Klaus, Dipl.-Ing.**
**Peterstalstrasse 157**
**A-8042 Graz (AT)**
Erfinder : **Ritter, Gerhard, Dipl.-Ing. Dr.**
**Unterer Plattenweg 47**
**A-8043 Graz (AT)**
Erfinder : **Pollhammer, Edgar, Dipl.-Ing.**
**Goethestrasse 50**
**A-8010 Graz (AT)**
Erfinder : **Scherr, Rudolf, Dipl.-Ing.**
**Ziegelstrasse 23**
**A-8045 Graz (AT)**

(74) Vertreter : **Holzer, Walter, Dipl.-Ing. et al**
**Patentanwälte Dipl.-Ing. Dr.techn. Schütz Alfred
Dipl.-Ing. Dr.techn. Pfeifer Rudolf Dr.phil. Mrazek
Engelbert Dipl.-Ing. Holzer Walter Dipl.-Ing. Pfeifer
Otto**
**Fleischmanngasse 9 A-1040 Wien (AT)**

Nach der elektrischen Widerstandsmethode arbeitende Vielpunkt-Schweißmaschine zum Herstellen von Gittern aus Längs- und Querdrähten

Die Erfindung betrifft eine nach der elektrischen Widerstandsmethode arbeitende Vielpunkt-Schweißmaschine zum Herstellen von Gittern aus Längs- und Querdrähten, mit einer Querreihe von ortsfesten Elektroden auf der einen Seite der Gitterherstellungsebene und einer Querreihe von ortsfesten Gegenelektroden auf der anderen Seite dieser Ebene, wobei zur Erzeugung von Gittern mit unterschiedlicher Maschenweite jeweils ausgewählte Elektroden und Gegenelektroden an einen Schweißtransformator anschaltbar sind.

Die Aufgabe der Erfindung besteht darin, bei einer Gitterschweißmaschine dieser aus der AT-B-317.650 bekannten Gattung zur Änderung der Maschenweite in Querrichtung des Gitters auf einfache Weise eine solche Umschaltung der Elektroden und Gegenelektroden zu ermöglichen, daß einerseits bei der kleinsten Maschenweite die Gefahr einer Verwerfung des Gitters infolge einer Erhitzung der Querdrähte vermieden wird und anderseits bei Gittern mit großer Maschenweite mit möglichst hohem Wirkungsgrad geschweißt werden kann.

Ursache für die im Rahmen der Erfindung zu vermeidenden Gitterverwerfungen sind die bei Vorhandensein einer Spannung zwischen benachbarten Drahtkreuzungs- bzw. Schweißpunkten durch den diese Punkte verbindenden Querdraht und die bereits zu fertigen Maschen verschweißten Drähte in der unmittelbaren Nachbarschaft desselben fließenden Ströme, welche eine unerwünschte und ungleichmäßige Erhitzung der stromdurchflossenen Drähte bewirken. Da der Leitwert der üblicherweise für geschweißte Gitter verwendeten Stahldrähte im Vergleich zu jenem der Kupferleiter im Schweißstromkreis gering ist, nehmen oberhalb einer durch Probeschweißungen leicht feststellbaren Maschenweite zufolge der dann zu hohen Widerstände in den Stahldrähten diese Ströme und damit auch die durch sie verursachte schädliche Erhitzung der Gitterdrähte soweit ab, daß keine Gitterverwerfungen mehr zu beobachten sind.

Die Erfindung beruht nun auf der Erkenntnis, daß es möglich ist, einerseits durch Anwendung der Einzelpunktschweißung bei der Herstellung von Gittern mit kleinster Maschenweite in Querrichtung Gitterverwerfungen zu vermeiden und anderseits durch Übergang auf die Doppelpunktschweißung bei Herstellung von Gittern mit großen Maschenweiten erhebliche Einsparungen an elektrischer Energie zu erzielen.

Es sei erwähnt, daß eine nach der Einzelpunktmethode arbeitende Gitterschweißmaschine bekannt ist (vgl. AT-B-295.294), bei welcher die zusammenwirkenden Elektroden zur Ermöglichung einer Änderung der Maschenweite der herzustellenden Gitter paarweise mechanisch zu Schweißköpfen vereinigt sind, die auf zwei in Querrichtung der Maschine angeordneten Stromschienen verstellbar sind. Dabei ist die eine Elektrode mittels eines Stromabnehmers auf der einen Stromschiene abgestützt, während sich die gegenüberliegende zweite Elektrode mittels einer starren, die Gitterherstellungsebene durchsetzenden Zuleitung und eines Stromabnehmers an der zweiten Stromschiene abstützt. Diese Gitterschweißmaschine hat zwar den Vorteil, daß sie eine kontinuierliche Änderung der Maschenweite ermöglicht, erfordert hierfür aber eine zeitraubende Verstellung der Schweißköpfe.

Hinsichtlich der erforderlichen elektrischen Energie wäre an sich die Doppelpunktschweißung der Einzelpunktschweißung vorzuziehen. Während bei der Einzelpunktschweißung der Strom von einer Elektrode über einen Drahtkreuzungspunkt zu einer Gegenelektrode fließt, fließt der Strom bei der Doppelpunktschweißung von einer Elektrode über einen Drahtkreuzungspunkt, eine jenseits der Gitterherstellungsebene liegende passive Strombrücke und einen zweiten Drahtkreuzungspunkt zu einer Gegenelektrode, so daß der gleiche Strom zwei Schweißpunkte erzeugt. Bei den bekannten, nach der Doppelpunktmethode arbeitenden Gitterschweißmaschinen (vgl. z. B. CH-A-450.580) sind aber zu einer Änderung der Maschenweite ebenfalls zeitraubende Verstellungen der Elektroden und meist auch ein Austausch der passiven Strombrücken erforderlich.

Die Erfindung befaßt sich nun mit der Aufgabe, unter Ausnutzung der schon erwähnten Erkenntnis, daß bei der kleinsten Maschenweite vorteilhaft eine Einzelpunktschweißung, bei größeren Maschenweiten hingegen vorteilhaft eine Doppelpunktschweißung angewendet werden soll, eine Vielpunkt-Schweißmaschine der einleitend angegebenen Gattung so auszubilden, daß sie auf einfache Weise eine solche mit einer Änderung der Maschenweite des herzustellenden Gitters verknüpfte Änderung der Schweißmethode trotz ortsfester Elektroden und Gegenelektroden ermöglicht.

Diese Aufgabe wird durch eine Schweißmaschine gemäß Anspruch gelöst.

Bei der kleinsten Maschenweite in Querrichtung des herzustellenden Gitters erfolgt dann die Schweißung nach der Einzelpunktmethode, wobei alle einander benachbarten Elektroden und Gegenelektroden jeder Reihe gleiches Potential aufweisen, so daß schädliche Nebenschlußströme vermieden werden, wogegen bei größerer Maschenweite nach der Doppelpunktmethode mit in Querrichtung nebeneinanderliegenden Schweißpunkten geschweißt wird, wobei jeweils zwei Schweißpunkte in einer gemeinsamen Schweißstrecke liegen, wodurch bei gleicher Schweißpunktanzahl gegenüber der Einzelpunktschweißung elektrische Energie gespart wird.

Vorzugsweise sind die starren Zuleitungen nach Art von zweiarmigen Hebeln (AT-B-295.294) schwenkbar an einem heb- und senkbaren Elektrodenbalken montiert, an dem unter Zwischenschaltung einer Isolierschicht der Ausgleichsleiter befestigt ist, wobei der Ausgleichsleiter seinerseits über flexible, eine Schwenkbewegung der starren Zuleitungen ermöglichende Leiterbänder mit den Gegenelektroden in Verbindung steht.

Die Erfindung wird nun unter Bezugnahme auf die Zeichnung an einem Ausführungsbeispiel genau beschrieben.

Figur 1 zeigt schematisch die wesentlichen Teile einer erfindungsgemäßen Vielpunkt-Schweißmaschine in Seitenansicht und die

Figuren 2a, 2b und 2c erläutern die bei kleinster Maschenweite bzw. bei größeren Maschenweiten wirksamen Elektroden und Gegenelektroden sowie deren Polung.

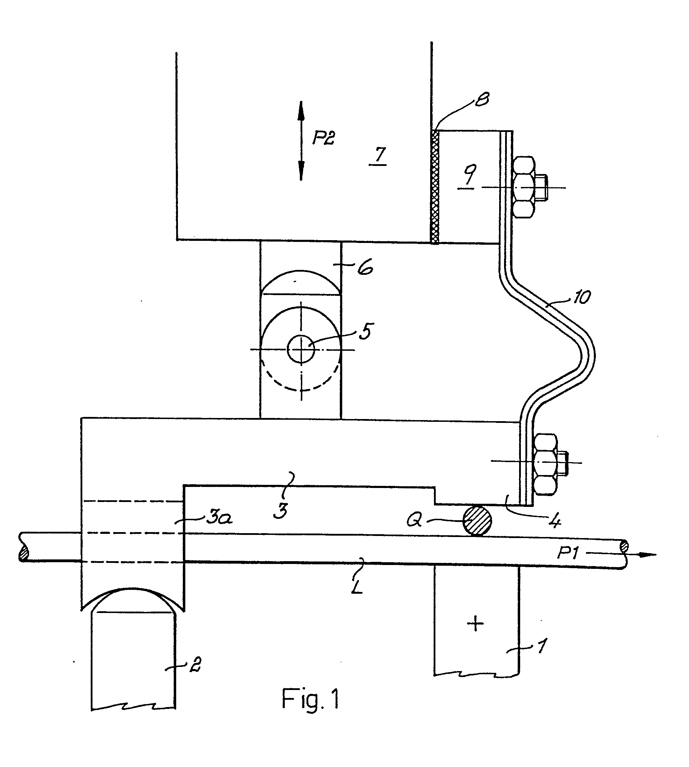

In der Vielpunkt-Schweißmaschine nach Figur 1 wird ein aus Längsdrähten L und Querdrähten Q bestehendes Gitter erzeugt und in Richtung des Pfeiles P1 vorgeschoben. In Gittervorschubrichtung sind unterhalb der Gitterherstellungsebene eine Querreihe von Elektroden 1 und eine Querreihe von Anschlußpolen 2 für Gegenelektroden vorgesehen. Die Anschlußpole 2 sind in einem Abstand von der Gitterherstellungsebene angeordnet und weisen ein bombiertes Auflager für die Schenkel 3a einer die Gitterherstellungsebene durchsetzenden starren Zuleitung 3 auf. Gegebenenfalls kann statt einzelner Anschlußpole auch eine durchgehende Stromschiene verwendet werden. Die Schenkel 3a der Zuleitungen 3 haben U-förmige Durchbrechungen für den Durchtritt je eines Längsdrahtes L.

Das dem Schenkel 3a gegenüberliegende Ende jeder Zuleitung 3 ist vorteilhaft verdickt und unmittelbar als Gegenelektrode 4 ausgebildet. Jede Gegenelektrode 4 wirkt mit einer zugeordneten Elektrode 1 zusammen.

Jede Zuleitung 3 ist mittels eines Bolzens 5 gelenkig an einem Stößel 6 befestigt. Wenn erforderlich, können Anschläge vorgesehen sein, um die mögliche Schwenkbewegung der Zuleitungen 3 gegenüber den Stößeln 6 zu begrenzen. Die Stößel 6 sind ihrerseits gleitend und federnd in einem in Richtung des Pfeiles P2 im Maschinengestell heb- und senkbaren Elektrodenbalken 7 gelagert.

Längs des Elektrodenbalkens 7 verläuft, durch eine Isolierschicht 8 von diesem elektrisch getrennt, ein Ausgleichsleiter 9 in Form einer sich über die gesamte Maschinenbreite erstreckenden, kräftigen Kupferschiene. Alle Gegenelektroden 4 stehen über Leiterbänder 10 mit dem Ausgleichsleiter 9 in dauernder leitender Verbindung.

Die Arbeitsweise der Maschine gemäß der Erfindung ist folgende :

Sind beispielsweise, wie in Figur 1 angedeutet, alle in einer Flucht liegenden Elektroden 1 an den augenblicklich positiven Pol und alle in einer Flucht liegenden Anschlußpole 2 an den augenblicklich negativen Pol der Sekundärwicklung eines Schweißtransformators angeschlossen, so fließen in allen Schweißstrecken die Ströme von den Elektroden 1 über den Kreuzungspunkt der Drähte L und Q in die Gegenelektroden 4 und von diesen über die Zuleitungen 3 und deren Schenkel 3a in die Anschlußpole 2.

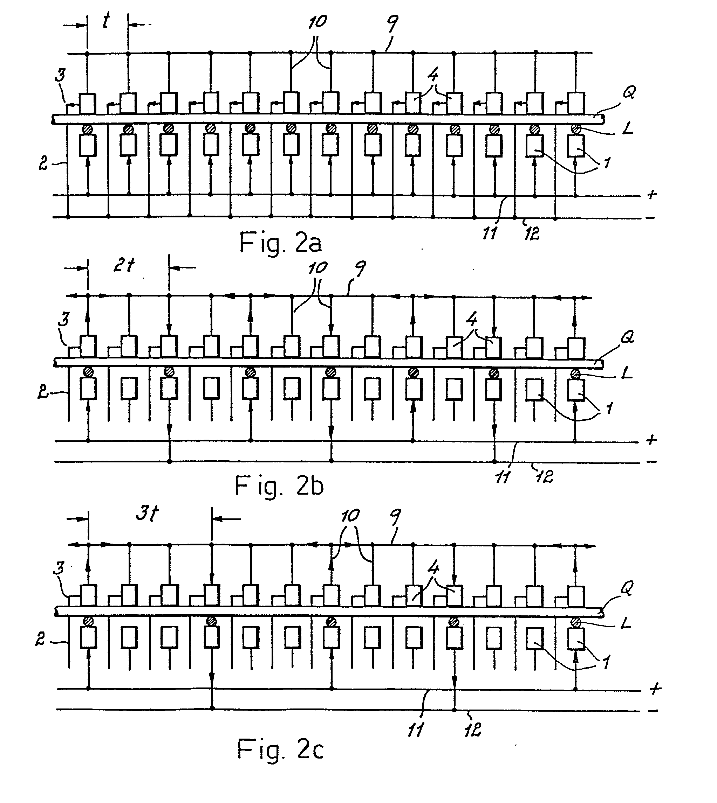

Figur 2a zeigt im Schema übereinander die Querreihen von Elektroden 1 und Gegenelektroden 4 in dieser während der Schweißung von Gittern mit der kleinsten, dem gegenseitigen Abstand t der Elektroden bzw. Gegenelektroden entsprechenden Maschenweite wirksamen Schaltung. Alle Elektroden 1 liegen, wie durch eine durchgehende Stromschiene 11 angedeutet worden ist, an dem einen, z. B. augenblicklich positiven Pol der Sekundärwicklung eines Schweißtransformators, wogegen die Gegenelektroden 4, die mittels der Leiterbänder 10 an den gemeinsamen Ausgleichsleiter 9 angeschlossen sind, über die in Figur 1 erkennbaren starren Zuleitungen 3 mit dem augenblicklich negativen Pol der Sekundärwicklung des Schweißtransformators verbunden sind.

Da alle Gegenelektroden 4 über die Leiterbänder 10 mit dem Ausgleichsleiter 9 verbunden sind, muß in allen Drahtkreuzungs- bzw. Schweißpunkten genau das gleiche Potential herrschen, selbst dann, wenn, etwa aufgrund von Verschmutzungen oder Oxydation, die Übergangswiderstände zwischen den einzelnen Anschlußpolen 2 und den zugeordneten Zuleitungen 3 ungleich groß sein sollten. Da alle Schweißpunkte an gleichem Potential liegen, fließen keine Ausgleichsströme durch die Querdrähte Q, und zwar weder durch die im unmittelbaren Schweißbereich befindlichen Querdrähte, noch durch jene Querdrähte, die bereits mit Längsdrähten fest verschweißt sind.

Sollen Gitter mit einer größeren Maschenweite erzeugt werden, bei welcher keine kritische Erhitzung der Querdrähte durch Ausgleichsströme mehr zu befürchten ist, so kann die Maschine durch Abschaltung einiger Elektroden und einfaches Umpolen der verbleibenden Elektroden auf Doppelpunktbetrieb umgestellt werden, bei dem erheblich an elektrischer Energie gespart wird.

Die Elektroden 1 und die Anschlußpole 2 können beispielsweise reiterartig auf zueinander parallelen, mit je einem Pol der Sekundärwicklung eines Schweißtransformators verbundenen Stromschienen sitzen und wahlweise mittels einer geeigneten Schalteinrichtung mit einer der beiden Stromschienen leitend verbunden oder von beiden Stromschienen isoliert werden. Eine hiefür geeignete Schalteinrichtung ist beispielsweise in der AT-PS 332.198 beschrieben, aber in der Zeichnung der Einfachheit halber nicht dargestellt, weil sie nicht Gegenstand der Erfindung ist.

In den Figuren 2b und 2c ist schematisch die Schaltung der Elektroden 1 und Gegenelektroden 4 für den Fall der Schweißung von Gittern mit den Maschenweiten 2t und 3t nach der Doppelpunktmethode dargestellt. Bei dieser Betriebsart werden alle Anschlußpole 2 vom Schweißstromkreis getrennt. Von den in einer Flucht liegenden Elektroden 1 wird gemäß Figur 2b jede zweite vom Schweißstromkreis abgetrennt und die verbleibenden Elektroden werden alternierend mit dem einen und anderen Pol der Sekundärwicklung des Schweißtransformators verbunden, wie die beiden Stromschienen 11 und 12 andeuten. Ebenfalls ist in Figur 2b angedeutet, wie die gespeisten Elektroden 1 paarweise mit Gegenelektroden 4 zusammenwirken, welche mittels ihrer Leiterbänder 10 und des Ausgleichsleiters 9 passive Strombrücken bilden.

Der Strom fließt von einer augenblicklich z. B. positiv gepolten Elektrode 1 über den Drahtkreuzungspunkt in die Gegenelektrode 4, von dieser über das Leiterband 10 in den Ausgleichsleiter 9 und längs dieses Ausgleichsleiters in das Leiterband 10 der benachbarten Gegenelektrode 4, um schließlich von dieser über den Drahtkreuzungspunkt in die benachbarte, augenblicklich negativ gepolte Elektrode 1 zu gelangen. In der Schweißstrecke zwischen den beiden vom Schweißtransformator gespeisten Elektroden 1 liegen zwei Drahtkreuzungspunkte in Serie, d. h. es erfolgt eine sog. Doppelpunktschweißung.

Figur 2c zeigt in analoger Weise die Schaltung der Elektroden und Gegenelektroden bei Schweißung von Gittern mit der Maschenweite 3t.

Bei der Doppelpunktschweißung liegt an benachbarten Drahtkreuzungspunkten zwar eine Spannung, doch ist infolge der großen Maschenweite der resultierende Widerstand der zwischen diesen Punkten liegenden Gitterdrähte im Vergleich zu dem Widerstand der von den gut leitenden Leiterbändern 10 und dem Ausgleichsleiter 9 gebildeten passiven Strombrücke so groß, daß keine nennenswerten Nebenschlußtröme durch Gitterdrähte fließen und Gitterverwerfungen daher vermieden werden.

## Ansprüche

1. Nach der elektrischen Widerstandsmethode arbeitende Vielpunkt-Schweißmaschine zum Herstellen von Gittern aus Längs- und Querdrähten, mit einer Querreihe von ortsfester Elektroden (1) auf der einen Seite der Gitterherstellungsebene und einer Querreihe von ortsfester Gegenelektroden (4) auf der anderen Seite dieser Ebene, wobei zur Erzeugung von Gittern mit unterschiedlicher Maschenweite jeweils ausgewählte Elektroden und Gegenelektroden an einen Schweißtransformator anschaltbar sind, dadurch gekennzeichnet daß parallel zu der Querreihe von Elektroden (1) eine gegebenenfalls zu einer Anschlußschiene vereinigte Reihe von den Gegenelektroden (4) zugeordneten Anschlußpolen (2) vorgesehen ist, mit welchen die Gitterherstellungsebene durchsetzende, starre Zuleitungen (3) Kontakt geben, die mit je einer Gegenelektrode (4) verbunden oder vereinigt sind, daß alle Gegenelektroden (4) dauernd mit einem parallel zur Gegenelektrodenreihe verlaufenden Ausgleichsleiter (9) in Verbindung stehen und daß die Anschlußpole (2) wahlweise mit dem einen Pol des Schweißtransformators verbindbar oder vom Schweißstromkreis abschaltbar sind, wogegen die Elektroden (1) wahlweise mit dem anderen Pol des Schweißtransformators verbindbar oder — bei abgeschalteten Anschlußpolen (2) — der Reihe nach unter Überspringung zumindest jeweils einer zwischenliegenden Elektrode alternierend an den einen bzw. anderen Pol des Schweißtransformators anschaltbar sind.

2. Vielpunkt-Schweißmaschine nach Anspruch 1, dadurch gekennzeichnet, daß die starren Zuleitungen (3) nach Art von zweiarmigen Hebeln schwenkbar an einem heb- und senkbaren Elektrodenbalken (7) montiert sind, an dem unter Zwischenschaltung einer Isolierschicht (8) der Ausgleichsleiter (9) befestigt ist, wobei der Ausgleichsleiter seinerseits über flexible, eine Schwenkbewegung der starren Zuleitungen (3) ermöglichende Leiterbänder (10) mit den Gegenelektroden (4) in Verbindung steht.

## Claims

1. Multispotwelding machine operating according to the electrical resistance welding method for the production of grids from longitudinal and transverse wires, comprising a transverse row of fixed electrodes (1) on the one side of the grid production plane and a transverse row of fixed counter-electrodes (4) on the other side of this plane, selected electrodes and counter-electrodes being connectable to the welding transformer for the production of grids of different mesh widths, characterized in that in parallel to the transverse row of electrodes (1) there is provided a row of contact terminals (2) pertaining to the counter-electrodes (4) and in case united to form a contact rail, rigid leads (3) traversing the grid production plane giving contact with said contact terminals, each of said leads being connected to or united with a counter-electrode (4), in that all counter-electrodes (4) are permanently connected to a balancing lead (9) extending in parallel to the row of counter-electrodes and in that the contact terminals (2) are alternatively connectable to the one terminal of the welding transformer or disconnectable from the welding current circuit, whereas the electrodes (1) are alternatively connectable to the other terminal of the welding transformer or — with the contact terminal (2) switched off — in sequence connectable alternatingly to the one or the other terminal of the welding transformer by omission of at least one in-between electrode at a time.

2. Multispotwelding machine according to claim 1, characterized in that the rigid leads (3) in the manner of two-armed levers are pivotally mounted on an electrode beam (7) which is adapted to be lifted and lowered and to which the balancing lead (9) is fastened with an intermediate insulating layer (8), the balancing lead in turn being connected to the counter-electrodes (4) via flexible rigid band leads (10) allowing a pivotal movement of the rigid leads (3).

## Revendications

1. Soudeuse par points par résistance électrique pour la fabrication de treillis constitués de fils longitudinaux et de fils transversaux, comportant une rangée transversale d'électrodes fixes (1) d'un côté du plan de fabrication du treillis et une rangée transversale de contre-électrodes fixes (4) de l'autre côté de ce plan, étant entendu que, pour fabriquer des treillis à dimensions de mailles différentes, des électrodes et des contre-électrodes sélectionnées chaque fois peuvent être connectées à un transformateur de soudage, caractérisée en ce que parallèlement à la rangée transversale d'électrodes (1) est prévue une rangée, réunie le cas échéant en une barre de connexion, de pôles de connexion (2) associés aux contre-électrodes (4), avec lesquelles sont en contact des conducteurs d'alimentation rigides (3) traversant le plan de fabrication du treillis, qui sont connectés ou réunis chacun à une contre-électrode (4), toutes les contre-électrodes (4) sont connectées à demeure à un conducteur d'égalisation (9) s'étendant parallèlement à la rangée des contre-électrodes et les pôles de connexion (2) peuvent au choix être connectés au premier pôle du transformateur de soudage ou être déconnectés du circuit électrique de soudage, tandis que les électrodes (1) peuvent au choix être connectées à l'autre pôle du transformateur de soudage ou, dans le cas de pôles de connexion (2) déconnectés, être connectés dans le sens de la rangée, en sautant chaque fois et de manière alternante au moins une électrode intermédiaire, au premier ou à l'autre pôle du transformateur de soudage.

2. Soudeuse par points suivant la revendication 1, caractérisée en ce que les conducteurs d'alimentation rigides (3) sont montés pivotants à la manière de leviers à deux bras sur une poutre à électrodes (7) pouvant être montée ou abaissée, sur laquelle le conducteur d'égalisation (9) est fixé avec intercalation d'une couche de matière isolante (8), le conducteur d'égalisation étant connecté, pour sa part, aux contre-électrodes (4) par l'intermédiaire de bandes conductrices flexibles (10) permettant un mouvement de pivotement des conducteurs d'alimentation rigides (3).

Fig. 1

# 0 030 934

Fig. 2a

Fig. 2b

Fig. 2c

2